(19) Europäisches Patentamt
European Patent Office
Office européen des brevets

(11) **EP 1 692 017 B1**

(12) **EUROPÄISCHE PATENTSCHRIFT**

(45) Veröffentlichungstag und Bekanntmachung des Hinweises auf die Patenterteilung:
**18.04.2012 Patentblatt 2012/16**

(21) Anmeldenummer: **04762462.2**

(22) Anmeldetag: **22.07.2004**

(51) Int Cl.:
**B60R 21/0132** (2006.01)

(86) Internationale Anmeldenummer:
**PCT/DE2004/001612**

(87) Internationale Veröffentlichungsnummer:
**WO 2005/044636 (19.05.2005 Gazette 2005/20)**

(54) **VORRICHTUNG ZUR BESTIMMUNG EINES KONTAKTZEITPUNKTS EINES FAHRZEUGS MIT EINEM AUFPRALLOBJEKT**

DEVICE FOR DETERMINING THE TIME OF CONTACT OF A VEHICLE WITH A COLLISION OBJECT

DISPOSITIF PERMETTANT DE DETERMINER UN TEMPS DE CONTACT ENTRE UN VEHICULE ET UN OBJET LORS D'UNE COLLISION

(84) Benannte Vertragsstaaten:
**DE ES FR**

(30) Priorität: **17.10.2003 DE 10348388**

(43) Veröffentlichungstag der Anmeldung:
**23.08.2006 Patentblatt 2006/34**

(73) Patentinhaber: **ROBERT BOSCH GMBH**
**70442 Stuttgart (DE)**

(72) Erfinder: **THEISEN, Marc**
**74354 Besigheim (DE)**

(56) Entgegenhaltungen:
**WO-A-03/042007    US-B1- 6 548 914**

**Beschreibung**

Stand der Technik

Die Erfindung geht aus von einer Vorrichtung zur Bestimmung eines Kontaktzeitpunkts eines Fahrzeugs mit einem Aufprallobjekt nach der Gattung des unabhängigen Patentanspruchs.

Aus DE 100 65 518 A1 ist es bereits bekannt, den Kontaktzeitpunkt eines Fahrzeugs mit einem Aufprallobjekt anhand eines Signals einer Precrashsensorik zu bestimmen.

Aus WO 03/042007 A1 ist es bekannt, einen Crashbeginn derart festzustellen, dass ein Integral einen vorgegebenen Schwellwert erreicht.

Vorteile der Erfindung

Die erfmdungsgemäße Vorrichtung zur Bestimmung eines Kontaktzeitpunkts eines Fahrzeugs mit einem Aufprallobjekt mit den Merkmalen des unabhängigen Patentanspruchs hat demgegenüber den Vorteil, dass allein anhand eines Beschleunigungssignals der Kontaktzeitpunkt genau bestimmt werden kann. Diese genaue Bestimmung wird durch eine Approximation des Signals, das vom Beschleunigungssignal abgeleitet ist, erreicht. Die Approximation führt zu einer Funktion, aus der dann der Kontaktzeitpunkt derart berechnet werden kann, dass der Nullpunkt bestimmt wird. Da bei einem Personenschutzsystem ein Beschleunigungssensor zumindest im zentralen Steuergerät vorhanden ist, ist das Beschleunigungssignal immer vorhanden. Damit ist keine zusätzliche Sensorik notwendig, um den Kontaktzeitpunkt genau zu bestimmen. Als Funktion zur Approximation des Signals kann beispielsweise eine quadratische Funktion verwendet werden. Die quadratische Funktion zeigt sich als besonders geeignet im Hinblick auf Genauigkeit und Aufwand. Aber auch andere Funktionen, die Anteile mit höheren oder gebrochenen Potenzen oder beispielsweise transzendente Funktionsanteile aufweisen, sind hier möglich. Den Kontaktzeitpunkt sehr genau zu bestimmen, ist eine Vorraussetzung für eine zeitgenaue Ansteuerung von Personenschutzmitteln wie Airbags, Gurtstraffern und Überrollbügeln. Aber auch für den Fußgängerschutz ist die Bestimmung des genauen Kontaktzeitpunkts ein wichtiger Parameter. Damit führt also die erfindungsgemäße Vorrichtung zu einer erhöhten Sicherheit der Fahrzeuginsassen. Wird dennoch eine Umfeldsensorik zur Bestimmung des Kontaktszeitpunkts bzw. zur Prädiktion des Kontaktzeitpunkts verwendet, dann kann die erfindungsgemäße Vorrichtung dazu verwendet werden, um entweder diese Prädiktion zu plausibilisieren oder um gegebenenfalls eine Differenz festzustellen, die dann separat zur Korrektur der prädizierten Werte der Umfeldsensorik, beispielsweise die Aufprallgeschwindigkeit, benutzt werden kann.

Durch die in den abhängigen Ansprüchen aufgeführten Maßnahmen und Weiterbildungen sind vorteilhafte Verbesserungen der erfindungsgemäßen Vorrichtung zur Bestimmung eines Kontaktzeitpunkts eines Fahrzeugs mit einem Aufprallobjekt möglich.

Besonders vorteilhaft ist, dass die Vorrichtung zur Erzeugung des Signals das Beschleunigungssignal filtert oder einmal integriert oder zweimal integriert. Diese Maßnahmen sind notwendig, um eine niederfrequente Funktion zu erhalten. Das Beschleunigungssignal alleine enthält beispielsweise zu viele hochfrequente Anteile, die eine Approximation durch eine Funktion sehr stark erschweren, insbesondere im Hinblick auf die Bestimmungen des Kontaktzeitpunkts. Daher ist entweder eine starke Filterung notwendig oder eine einfache oder zweifache Integration, die ebenfalls eine Filterwirkung haben. Bei der Verwendung der zweifachen Integration kann beispielsweise eine Approximation durch eine quadratische Funktion durchgeführt werden. Aus der Lage des Scheitelpunkts der quadratischen Funktion kann dann der Kontaktzeitpunkt rückwärtig berechnet werden. Damit ergibt sich ein einfach zu lösendes lineares Regressionsproblem. Zur Filterung können insbesondere Tiefpassfilter erster oder höherer Ordnung verwendet werden.

Weiterhin ist es vorteilhaft, dass die Vorrichtung bei der Bestimmung des Kontaktzeitpunkts zusätzlich eine Aufprallgeschwindigkeit berücksichtigt. Dies ist vorteilhaft, denn je höher die Aufprallgeschwindigkeit ist, desto schneller werden härtere Strukturen im Fahrzeug getroffen, so dass die Berücksichtigung der Aufprallgeschwindigkeit die Bestimmung des Kontaktzeitpunkts verbessert. Es vergeht also eine gewisse geschwindigkeitsabhängige Zeitspanne zwischen dem tatsächlichen Kontakt und dem durch den Parabelscheitelpunkt definierten Zeitpunkt. Man erreicht also eine Verbesserung, wenn man von dem durch den Parabelscheitelpunkt definierten Zeitpunkt eine geschwindigkeitsabhängige Zeitspanne abzieht. Ein möglicher Ansatz zur Berechnung dieser Zeitspanne ist eine von der Geschwindigkeit abhängige lineare Funktion der Form $f(cv)=a*cv+b$, wobei a und b für ein bestimmtes Fahrzeug applizierbare Parameter sind. Die Aufprallgeschwindigkeit kann insbesondere in Abhängigkeit von der Eigengeschwindigkeit bestimmt werden, wobei die Eigengeschwindigkeit in erster Näherung als Aufprallgeschwindigkeit verwendet werden kann, oder es kann auch ein Signal einer Umfeldsensorik, zum Beispiel eine Radar-, Video- und/oder Ultraschallsensorik, verwendet werden, um insbesondere die Relativgeschwindigkeit zwischen dem Aufprallobjekt und dem Fahrzeug zu berücksichtigen.

Die Approximation des Beschleunigungssignals wird vorteilhafter Weise durch Schwellwerte erreicht, indem das Signal auf diese Schwellwerte geprüft wird, um durch die Schwellwerte Abtastzeitpunkte des Signals zu erreichen. In der einfachsten Approximation können zwei Schwellwerte verwendet werden. Gute Ergebnisse liefern jedoch vier Schwellwerte. Je nach dem wie viel Rechenkapazität und Speicher zur Verfügung steht, kann auch eine größere Anzahl von Schwellwerten verwendet werden.

Zeichnung

Ausführungsbeispiele der Erfindung sind in der Zeichnung dargestellt und werden in der nachfolgenden Beschreibung näher erläutert.

Es zeigen

    Figur 1 ein Blockschaltbild der erfindungsgemäßen Vorrichtung,
    Figur 2 das Signal und die entsprechende Approximation und
    Figur 3 ein Flussdiagramm.

Beschreibung

Ziel der Erfindung ist die genaue Bestimmung des Kontaktzeitpunkts zwischen dem Fahrzeug, in dem sich die Vorrichtung befindet, und einem Aufprallobjekt, das ein anderes Fahrzeug sein kann, aber auch andere Objekte, wie ein Laternenpfahl, eine Hauswand oder auch Fußgänger oder Radfahrer. Der Kontaktzeitpunkt ist wichtig für die Ansteuerung der Personenschutzmittel wie Airbags, Gurtstraffer oder Überrollbügel bzw. die Ansteuerung der Fußgängerschutzmittel. Insbesondere hilft die genaue Kenntnis des Kontaktzeitpunkts zur Bestimmung der Crashschwere und damit zur zielgenauen Ansteuerung der Personenschutzmittel im Hinblick auf ihre Rückhaltekraft. Dies betrifft insbesondere mehrstufige Airbags und Gurtstraffer.

Erfindungsgemäß wird nun vorgeschlagen, den Kontaktzeitpunkt möglichst exakt ausschließlich auf Basis der Aufprallgeschwindigkeit und des Signals, das von einem Beschleunigungssignal abgeleitet wurde, zu bestimmen. Das Beschleunigungssignal wird in vorteilhafter Weise bereits im zentralen Steuergerät, das üblicherweise auf dem Fahrzeugtunnel angeordnet ist, erzeugt. Es ist jedoch möglich, dass auch externe Beschleunigungssensoren oder eine kinematische Sensorplattform zur Erzeugung dieses Beschleunigungssignals verwendet werden können. Da das Beschleunigungssignal selbst zu viele hochfrequente Anteile aufweist, um eine sinnvolle Approximation durch eine Funktion durchzuführen., ist eine Glättung des Signals erforderlich. Diese Glättung wird entweder durch eine entsprechende Filterung, vorzugsweise eine Tiefpassfilterung erreicht und/oder auch durch eine einfache oder zweifache Integration. Bei der Berechnung des Kontaktzeitpunkts kann in vorteilhafter Weise die Aufprallgeschwindigkeit berücksichtigt werden. Für die Aufprallgeschwindigkeit kann die Eigengeschwindigkeit und/oder ein Signal von einer Umfeldsensorik verwendet werden. Solch ein Signal kann beispielsweise die Relativgeschwindigkeit zwischen dem Fahrzeug und dem Aufprallobjekt sein.

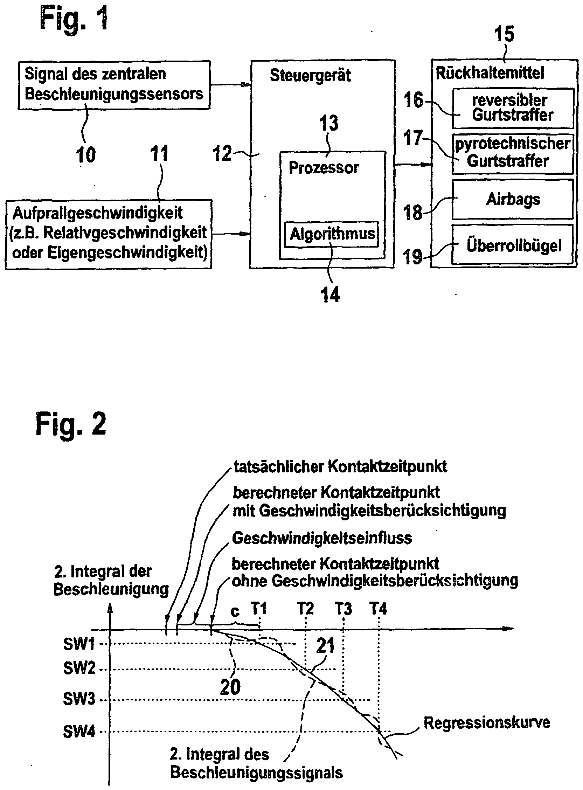

Figur 1 erläutert in einem Blockschaltbild die erfindungsgemäße Vorrichtung. Ein Steuergerät 12 weist zumindest einen Beschleunigungssensor auf und erhält von diesem ein Signal 10. Dieser Beschleunigungssensor ist üblicherweise zumindest in Fahrzeuglängsrichtung angeordnet, es kann sich jedoch auch um eine winklige Konfiguration von Beschleunigungssensoren im Steuergerät 12 handeln, insbesondere ist auch eine 45°-Anordnung von zwei Beschleunigungssensoren bekannt, die es ermöglicht Beschleunigungen in einer Ebene zu erfassen. Auch ein Beschleunigungssensor in Fahrzeugquerrichtung ist üblich.

Das Steuergerät weist einen Prozessor 13 auf, auf dem ein Algorithmus 14 zur Bestimmung des Kontaktzeitpunkts abläuft. Neben dem Algorithmus 14 laufen noch weitere Algorithmen ab, beispielsweise zur Bestimmung der Auslösezeiten für die Rückhaltemittel. Das Steuergerät 12 steuert demnach über Zündkreise Rückhaltemittel 15 an. Dazu zählen reversible Gurtstraffer 16, die also insbesondere elektromotorisch betätigt werden, pyrotechnische Gurtstraffer 17, Airbags 18 und Überrollbügel 19. Eine Option ist, wie oben dargestellt, die Berücksichtigung der Aufprallgeschwindigkeit. Die Aufprallgeschwindigkeit 11 kann anhand der Relativgeschwindigkeit also mit Hilfe eines Umfeldsensorsignals und/oder der Eigengeschwindigkeit bestimmt werden. Die einfachste Lösung ist es, die Eigengeschwindigkeit, die mittels Raddrehsensoren bestimmt und/oder von der Tachometerinformation übernommen werden, als Aufprallgeschwindigkeit zu verwenden. Das Signal des zentralen Beschleunigungssensors 10 wird durch den Prozessor 13 gegebenenfalls gefiltert und/oder einfach bzw. zweifach integriert, um eine Glättung zu erreichen. Das geglättete Signal wird dann durch eine Funktion im Prozessor 13 und im Algorithmus 14 approximiert, um aus dem Scheitelpunkt der beispielsweise quadratischen Funktion den Kontaktzeitpunkt zu berechnen. Optional ist es möglich, unter Berücksichtigung der Aufprallgeschwindigkeit 11 eine Korrektur des berechneten Kontaktzeitpunkts durchzuführen.

Figur 2 erläutert nun das Verfahren der Approximation in einem Signalzeitdiagramm. Auf der Ordinate ist das zweite Integral des Beschleunigungssignals aufgetragen, während auf der Abszisse die Zeit abgetragen wird. Das zweite Integral der Beschleunigung ist durch die gestrichelte Kurve 20 repräsentiert. Hier sind vier Schwellwerte SW1, SW2, SW3 und SW4 vorgesehen, die zeitinvariant sind, d. h. sie werden nicht in Abhängigkeit von der Zeit geändert. Übertrifft das Signal 20 die jeweiligen Schwellwerte SW1, SW2, SW3 und SW4, wird dies durch die Zeitpunkte T1, T2, T3 und T4 markiert. Damit liegen Abtastwerte des Signals 20 vor. Durch diese Abtastwerte wird dann eine beispielsweise quadratische Funktion gelegt, die den Zusammenhang zwischen den Zeitpunkten T1, T2, T3 und T4 und den Schwellwerten SW1, SW2, SW3 und SW4 möglichst gut beschreibt. Wenn die Abbildung der Zeitpunkte auf die Schwellwerte quadratisch ist, dann bildet eine Wurzelfunktion die Schwellwerte auf die Zeitpunkte ab. Da die Schwellwerte vor Ablauf des Verfahrens festgelegt worden sind, wird im Folgenden die Wurzelfunktion, also die Abbildung der Schwellwerte auf die Zeitpunkte, betrachtet. Diese ist also von der allgemeinen Form:

$$f(SW) = a\sqrt{-SW + b} + c.$$

Sie muss der weiteren Nebenbedingung gehorchen, dass ihre Ableitung für den Schwellwert 0 den Wert Unendlich hat. Es gilt daher:

$$f'(SW) = -a\frac{1}{\sqrt{-SW + b}}.$$

Daraus folgt, dass b = 0 ist. Dann gilt

$$f(SW) = a\sqrt{-SW} + c.$$

Da die Schwellwerte SW1 bis SW4 während der Applikationsphase, d. h. vor der Anwendung im Steuergerät definiert werden, kann der Wurzelausdruck schon vorab berechnet werden, so dass es sich bei der Bestimmung der Lage des Scheitelpunktes um ein lineares Regressionsproblem handelt, das sich aufgrund seines geringen Rechenaufwandes während der Anwendung auf dem Steuergerät berechnen lässt.

Der Parameter c beschreibt die Lage des Scheitelpunkts der Wurzelfunktion. Wie in Figur 2 dargestellt, ergibt sich daraus eine erste Näherung für die Zeitspanne, die seit dem Kontaktzeitpunkt bis zum Zeitpunkt T1, d. h. bis zur Überschreitung der Schwelle SW1, vergangen ist. Dies bedeutet, dass aus der Kenntnis des Zeitpunkts T1 und des Summanten c der Kontaktzeitpunkt zurückberechnet werden kann. Eine weitere Verbesserung ergibt sich, wenn in der Berechnung die Aufprallgeschwindigkeit mit berücksichtigt wird. Diese kann in erster Näherung durch die Fahrzeugeigengeschwindigkeit approximiert werden. Je höher nämlich die Aufprallgeschwindigkeit ist, desto schneller werden die härteren Strukturen im Fahrzeug getroffen und um so näher liegt der aus T1 und c berechnete Kontaktzeitpunkt am tatsächlichen, da die Zeitspanne kürzer ist, die vergeht, bis es zu einem signifikanten Beschleunigungssignal kommt. Eine verbesserte Berechnung des Kontaktzeitpunkts ergibt sich somit, wenn man von diesem so berechneten Kontaktzeitpunkt eine Zeitdauer abzieht, die linear von der Aufprallgeschwindigkeit abhängig ist.

Entsprechend der Rechenkapazität ist es möglich, die Berechnung mit mehr oder weniger Schwellwerten und Zeitpunkten, mit einer einfacheren, z. B. einer linearen oder komplexeren Punktion, beispielsweise unter Hinzunahme eines Terms mit einer dritten Wurzel bzw. mit einer einfacheren bzw. abschnittsweisen konstanten Funktion oder mit einem komplexeren Ansatz unter Berücksichtigung der Aufprallgeschwindigkeit durchzuführen. Durch solche Maßnahmen ist es möglich den Rechenaufwand zu reduzieren bzw. die Genauigkeit der Berechnung zu erhöhen. Die Regressionskurve ist in Figur 2 mit dem Bezugszeichen 21 gekennzeichnet.

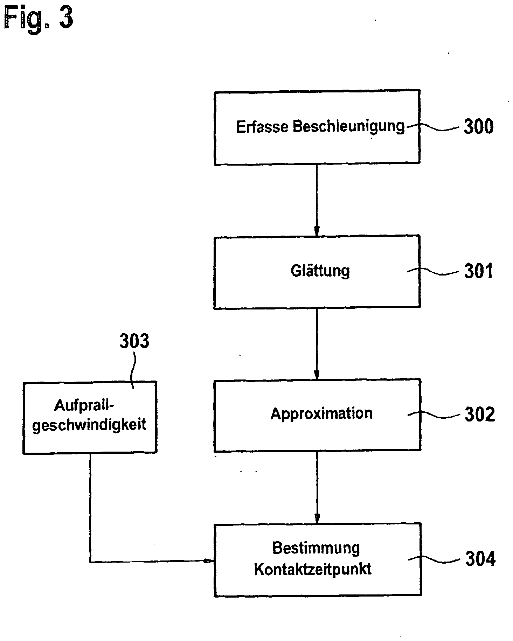

Figur 3 erläutert in einem Flussdiagramm den Ablauf, den die erfindungsgemäße Vorrichtung durchläuft. In Verfahrensschritt 300 wird mit einem Beschleunigungssensor im Steuergerät die Beschleunigung erfasst und ein Beschleunigungssignal erzeugt. Der Beschleunigungssensor ist mikromechanisch ausgeführt, kann jedoch auch anders gestaltet sein. Das Beschleunigungssignal wird beispielsweise dem Analogeingang eines Mikrocontrollers im Steuergerät zugeführt oder es handelt sich um einen digitalen Beschleunigungssensor, der bereits selbst das digitale Signal ausgibt. Bereits im analogen Bereich kann eine Glättung durch Filter, beispielsweise Tiefpassfilter erfolgen, wobei solche Filter auch elektronisch implementiert sein können und diese dann an digitalen Signalen durch den Mikrocontroller angewendet werden. Diese Glättung erfolgt im Verfahrensschritt 301. Dazu gehört auch die hier verwendete zweifache Integration des Beschleunigungssignals, die ebenfalls zur Glättung führt. Damit liegt dann eine niederfrequentere Funktion vor, an der in Verfahrensschritt 302 eine Approximation durch eine Funktion durchgeführt wird. Diese Approximation wird anhand von Stützstellen an den zweifach integrierten Beschleunigungssignal, also der Vorverlagerung, durchgeführt. Die Stützstellen werden durch Schwellwerte und die Zeiten, bei denen die approximierende Funktion die Schwellwerte annimmt, festgelegt. Von dieser approximierenden Funktion wird der Scheitelpunkt berechnet. Dieser Scheitelpunkt bestimmt in erster Näherung den Kontaktzeitpunkt. Dies wird in Verfahrensschritt 304 durchgeführt. Eine verbesserte Berechnung des Kontaktzeitpunkts ergibt sich somit, wenn man von diesem so berechneten Kontaktzeitpunkt eine Zeitdauer abzieht, die linear von der Aufprallgeschwindigkeit abhängig ist. Die Aufprallgeschwindigkeit wird in Verfahrensschritt 303 bereitgestellt, um sie dann in Verfahrensschritt 304 bei der Bestimmung des Kontaktzeitpunkts zu berücksichtigen. Wie oben dargestellt, ist die Berücksichtigung der Aufprallgeschwindigkeit optional.

## Patentansprüche

1. Verfahren zur Bestimmung eines Kontaktzeitpunkts eines Fahrzeugs mit einem Aufprallobjekt, **dadurch gekennzeichnet, dass** der Kontaktzeitpunkt durch eine Approximation eines von einem Beschleunigungssignal (10) abgeleiteten Signal (20) mit einer Funktion (21) bestimmt, wobei aus der Funktion (21) der Kontaktzeitpunkt rüchwäntig derart berechnet wird, dass der Nullpunkt bestimmt wird.

**2.** Verfahren nach Anspruch 1, **dadurch gekennzeichnet, dass** zur Erzeugung des Signals (20) das Beschleunigungssignal (10) gefiltert oder einmal integriert oder zweimal integriert wird.

**3.** Verfahren nach Anspruch 1 oder 2, **dadurch gekennzeichnet, dass** bei der Bestimmung des Kontaktzeitpunkts zusätzlich eine Aufprallgeschwindigkeit (11) berücksichtigt wird.

**4.** Verfahren nach Anspruch 3, **dadurch gekennzeichnet, dass** die Aufprallgeschwindigkeit (11) in Abhängigkeit von der Eigengeschwindigkeit bestimmt wird.

**5.** Verfahren nach Anspruch 3 oder 4, **dadurch gekennzeichnet, dass** die Aufprallgeschwindigkeit (11) in Abhängigkeit von einem Umfeldsignal bestimmt wird.

**6.** Verfahren nach einem der vorherigen Ansprüche, **dadurch gekennzeichnet, dass** das Signal (20) mittels wenigstens zweier Schwellwerte (SW1, SW2, SW3, SW4) approximiert wird.

**7.** Verfahren nach einem der vorhergehenden Ansprüche, **dadurch gekennzeichnet, dass** eine quadratische Funktion (21) verwendet wird.

**8.** Verfahren nach Anspruch 7, **dadurch gekennzeichnet, dass** aus einem Scheitelpunkt der quadratischen Funktion (21) der Kontaktzeitpunkt bestimmt wird.

**9.** Verfahren nach Anspruch 8, **dadurch gekennzeichnet, dass** die Aufprallgeschwindigkeit linear bei der Bestimmung des Kontaktzeitpunkts berücksichtigt wird.

**Claims**

**1.** Method for determining a time of contact of a vehicle with a collision object, **characterized in that** the time of contact is determined by approximation of a signal (20), derived from an acceleration signal (10), with a function (21), wherein the time of contact is calculated in reverse from the function (21) in such a way that the zero point is determined.

**2.** Method according to Claim 1, **characterized in that** in order to generate the signal (20) the acceleration signal (10) is filtered or integrated once or integrated twice.

**3.** Method according to Claim 1 or 2, **characterized in that** a collision speed (11) is additionally taken into account in the determination of the time of contact.

**4.** Method according to Claim 3, **characterized in that** the collision speed (11) is determined as a function of the vehicle's own speed.

**5.** Method according to Claim 3 or 4, **characterized in that** the collision speed (11) is determined as a function of a surroundings signal.

**6.** Method according to one of the preceding claims, **characterized in that** the signal (20) is approximated by means of at least two threshold values (SW1, SW2, SW3, SW4).

**7.** Method according to one of the preceding claims, **characterized in that** a quadratic function (21) is used.

**8.** Method according to Claim 7, **characterized in that** the time of contact is determined from an apex point of the quadratic function (21).

**9.** Method according to Claim 8, **characterized in that** the collision speed is taken into account linearly in the determination of the time of contact.

**Revendications**

**1.** Procédé de détermination de l'instant de contact d'un véhicule avec un objet de collision, **caractérisé en ce que** l'instant du contact est déterminé par une approximation d'un signal (20) dérivé d'un signal d'accélération (10) avec une fonction (21), l'instant du contact étant calculé rétroactivement à partir de la fonction (21) de telle sorte que le point zéro est défini.

**2.** Procédé selon la revendication 1, **caractérisé en ce que** pour générer le signal (20), le signal d'accélération (10) est filtré ou intégré une fois ou intégré deux fois.

**3.** Procédé selon la revendication 1 ou 2, **caractérisé en ce qu'**une vitesse de collision (11) est en plus prise en compte lors de la détermination de l'instant du contact.

**4.** Procédé selon la revendication 3, **caractérisé en ce que** la vitesse de collision (11) est déterminée en fonction de la vitesse propre.

**5.** Procédé selon la revendication 3 ou 4, **caractérisé en ce que** la vitesse de collision (11) est déterminée en fonction d'un signal de champ environnant.

**6.** Procédé selon l'une des revendications précédentes, **caractérisé en ce que** le signal (20) est déterminé approximativement au moyen d'au moins deux valeurs de seuil (SW1, SW2, SW3, SW4).

**7.** Procédé selon l'une des revendications précédentes, **caractérisé en ce qu'**une fonction quadratique (21) est utilisée.

**8.** Procédé selon la revendication 7, **caractérisé en ce que** l'instant du contact est déterminé à partir d'un sommet de la fonction quadratique (21).

**9.** Procédé selon la revendication 8, **caractérisé en ce que** la vitesse de collision est prise en compte de manière linéaire lors de la détermination de l'instant du contact.

# Fig. 1

| Signal des zentralen Beschleunigungssensors | → | Steuergerät | | Rückhaltemittel 15 |
|---|---|---|---|---|

```
Signal des zentralen
Beschleunigungssensors
         10        11          12

Aufprallgeschwindigkeit
(z.B. Relativgeschwindigkeit
oder Eigengeschwindigkeit)
```

Steuergerät

13

Prozessor

Algorithmus

14

Rückhaltemittel 15

16 reversibler Gurtstraffer

17 pyrotechnischer Gurtstraffer

18 Airbags

19 Überrollbügel

# Fig. 2

tatsächlicher Kontaktzeitpunkt

berechneter Kontaktzeitpunkt
mit Geschwindigkeitsberücksichtigung

Geschwindigkeitseinfluss

berechneter Kontaktzeitpunkt
ohne Geschwindigkeitsberücksichtigung

2. Integral der
Beschleunigung

c  T1    T2    T3    T4

SW1

SW2

SW3

SW4

21

20

Regressionskurve

2. Integral des
Beschleunigungssignals

# Fig. 3

```
                           ┌─────────────────────────┐
                           │  Erfasse Beschleunigung │─── 300
                           └─────────────────────────┘
                                       │
                                       ▼
                           ┌─────────────────────────┐
                           │        Glättung         │─── 301
                           └─────────────────────────┘
                                       │
                                       ▼
        303                ┌─────────────────────────┐
         ┌─────────────────┐                         │
         │   Aufprall-     │  │     Approximation    │─── 302
         │ geschwindigkeit │  └─────────────────────────┘
         └─────────────────┘              │
                 │                         ▼
                 │          ┌─────────────────────────┐
                 └─────────▶│       Bestimmung        │─── 304
                            │    Kontaktzeitpunkt     │
                            └─────────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10065518 A1
- WO 03042007 A1